# EUROPÄISCHE PATENTSCHRIFT

(11) **EP 1 340 302 B1**
(45) Veröffentlichungstag und Bekanntmachung des Hinweises auf die Patenterteilung: **09.01.2013**
(21) Anmeldenummer: 01982478.8
(22) Anmeldetag: 10.11.2001
(51) Int. Cl.: H02H 9/04, H02J 5/00

(54) **VERFAHREN ZUM SCHUTZ MINDESTENS EINES VERBRAUCHERS VOR ÜBERSPANNUNGEN UND EINE VORRICHTUNG ZUR DURCHFÜHRUNG DES VERFAHRENS**
METHOD FOR PROTECTING AT LEAST ONE CONSUMER AGAINST SURGES AND A DEVICE FOR CARRYING OUT SAID METHOD
PROCEDE PERMETTANT DE PROTEGER AU MOINS UN CONSOMMATEUR PAR RAPPORT A DES SURTENSIONS ET DISPOSITIF PERMETTANT DE METTRE EN OEUVRE CE PROCEDE

(30) Priorität: 01.12.2000 DE 10060038; 18.01.2001 DE 10101988
(43) Veröffentlichungstag der Anmeldung: 03.09.2003
(73) Patentinhaber: SEW-EURODRIVE GmbH & Co. KG, 76646 Bruchsal (DE)
(72) Erfinder: KOLLAR, Hans-Jürgen, 76646 Bruchsal (DE)
(86) Internationale Anmeldenummer: PCT/EP2001/013027
(87) Internationale Veröffentlichungsnummer: WO 2002/045227

(56) Entgegenhaltungen:
- DE-C- 19 735 624
- US-A- 5 734 256

## Beschreibung

Die Erfindung betrifft ein Verfahren zum Schutz mindestens eines Verbrauchers vor Überspannungen und eine Vorrichtung zur Durchführung des Verfahrens.

Aus der DE 197 35 624 C1 ist ein Verfahren bekannt zur berührungslosen Energieübertragung elektrischer Leistung aus einer Mittelfrequenzstromquelle mit einer Mittenfrequenz f_{M} auf einen oder mehrere bewegte Verbraucher über eine Übertragungsstrecke und aus den bewegten Verbrauchern zugeordneten Übertragerköpfen mit nachgeschaltetem Anpasssteller zum Einstellen der von der Übertragungsstrecke aufgenommenen Leistung, wobei die Übertragungsstrecke von der Mittelfrequenzstromquelle mit einem während der Leistungsübertragung in seinem Effektivwert konstanten Mittelfrequenzstrom gespeist wird.

Der Anpasssteller wandelt den aus dem Übertragerkopf eingeprägten mittelfrequenten Strom in eine Gleichspannung. Wie in den Figuren 3, 7a und 7b und zugehöriger Beschreibung der DE 197 35 624 C1 beschrieben, wird der Schalter T_{S} synchron zum Verlauf und mit der doppelten Frequenz des Eingangsstroms des Anpassstellers betrieben. Ein erheblicher Nachteil ist jedoch, dass diese hohe Schaltfrequenz 2 f_{M} hohe Schaltverluste zur Folge hat. Ein weiterer Nachteil ist, dass sich das synchrone Prinzip nicht mehr aufrecht erhalten lässt bei Verwendung mehrerer asynchron arbeitender Einspeisungen zur Versorgung eines Anpassstellers.

Bei der DE 197 35 624 C1 wird ein Relais verwendet, das nach Einschalten des Anpassstellers mit Niederspannung in den sperrenden Zustand geht. Bei Ausschalten oder bei einem Kurzschluss im Bereich dieser Niederspannung fällt das Relais in den leitenden Zustand zurück. Nachteilig ist, dass das Relais mechanischem Verschleiß unterliegt und somit zu einem Unfall führen kann. Nachteilig ist des Weiteren, dass in der DE 197 35 624 C1 bei einem Notfall eine gefährlich hohe Spannung am Verbraucher auftreten kann, die zu Unfällen führen kann.

Der Erfindung liegt daher die Aufgabe zugrunde, die Sicherheit bei einem Anpasssteller zu erhöhen, insbesondere soll bei einem Notfall oder bei ungewöhnlichen Betriebszuständen Brandgefahr vermieden werden.

Erfindungsgemäß wird die Aufgabe bei dem Verfahren zum Schutz mindestens eines Verbrauchers vor Überspannungen nach den in Anspruch 1 angegebenen Merkmalen und bei der Vorrichtung zur Verwendung bei einem solchen Verfahren nach den in Anspruch 8 angegebenen Merkmalen gelöst.

Von Vorteil ist dabei, dass im Notfall der Überspannungsschutz aktiv wird Beispielsweise ist ein solcher Notfall bei Ausfall der Niederspannungsversorgung für die Ansteuerung des Schalters (S, V1) gegeben oder bei einem Reglerdefekt oder dergleichen. Dabei steigt die Spannung am Zwischenkreiskondensator an und kann gefährliche Werte erreichen. Auch bei einer Überlastung der gesamten Anlage und/oder wenn der Anpasssteller unterversorgt ist, kann dies unter Umständen geschehen. In diesen Fällen wird dann vorteiligerweise der Zwischenkreisstrom abgeleitet und ein weiteres Ansteigen der Spannung am Zwischenkreiskondensator verhindert.

Weiterer Vorteil ist, dass der Überspannungsschutz verschleißfrei ausführbar ist und keine mechanischen Teile, wie Relais oder dergleichen eingesetzt werden müssen. Insbesondere ist Funkenbildung verhindert und der Betrieb in explosionsgefährdeten Bereichen ermöglicht.

Bei Notfällen, die nicht durch Versagen oder Zerstörungen verursacht sind, ist sogar nach Reset des Anpassstellers oder nach Ausschalten der Anlage und/oder Beseitigen der Ursache eine Wiederverwendung des Anpasssteilers vorteilhaft ausführbar.

Bei einer vorteilhaften erfindungsgemäßen Ausführungsform ist der Thyristor nach Zünden erst bei Verschwinden des durch ihn abgeleiteten Stromes gesperrt wird. Von Vorteil ist dabei, dass er kostengünstig ist und nach Zünden keine weitere Ansteuerung notwendig ist.

Bei einer vorteilhaften erfindungsgemäßen Ausführungsform wird die Signalelektronik zur Erzeugung des Ansteuersignals für den elektronischen Leistungsschalter aus der Spannung am Zwischenkreiskondensator versorgt. Von Vorteil ist dabei, dass keine spezielle Spannungsversorgung, wie Notstrom-Batterie oder dergleichen, notwendig ist.

Bei einer vorteilhaften erfindungsgemäßen Ausführungsform umfasst die Signalelektronik zur Erzeugung des Ansteuersignals für den elektronischen Leistungsschalter eine Mitkopplung. Von Vorteil ist dabei, dass nach Überschreiten der kritischen Spannung der Überspannungsschutz aktiviert ist und sich selbst stabilisiert.

Bei einer vorteilhaften erfindungsgemäßen Ausführungsform wird der jeweilige Schalter derart geschaltet, dass die Schaltfrequenz 1/T kleiner ist als die zweifache Mittelfrequenz, also1/T< 2f_{M}.

Von Vorteil ist dabei, dass die Schaltverluste geringer sind als bei Verfahren, die eine Schaltfrequenz von 2f_{M} voraussetzen und dass nicht nur synchron, sondern auch mehrere asynchron arbeitende Einspeisungen zur Versorgung eines Anpassstellers einsetzbar sind. Außerdem ist der Stromfluss mittels eines einzigen Schalters steuerbar.

Bei einer vorteilhaften erfindungsgemäßen Ausführungsform wird die Schaltfrequenz 1/T als Wert zwischen 0,5 f_{M} und 1,5 f_{M} gewählt. Von Vorteil ist dabei, dass bei möglichst geringen Schaltverlusten eine Zwischenkreisdrossel mit möglichst kleiner Baugröße einsetzbar ist.

Bei einer vorteilhaften erfindungsgemäßen Ausführungsform wird das Schalten des Schalters periodisch mit einer Frequenz 1/T und asynchron zu einer oder mehreren mittelfrequenten Einspeisungen derart ausgeführt, dass kein konstanter Phasenbezug zu den Strömen einer oder mehrerer Einspeisungen vorhanden ist. Von Vorteil ist dabei, dass das Verfahren robust ausführbar ist und Mittel zur Synchronisation einsparbar sind.

Bei einer vorteilhaften erfindungsgemäßen Ausführungsform wird die Zwischenkreisdrossei derart ausgelegt, dass der Zwischenkreisstrom im Betrieb nicht lückt. Von Vorteil ist dabei, dass trotz der obengenannten niedrigen Schaltfrequenz ein kontinuierlicher Leistungsfluss gewährleistet ist.

Bei einer vorteilhaften erfindungsgemäßen Ausführungsform weisen die Frequenzen der mittelfrequenten Einspeisungen Abweichungen um f_{M} auf. Von Vorteil ist dabei, dass die Einspeisungen nicht zueinander synchronisiert werden müssen.

Wesentliche Merkmale der Erfindung bei der Vorrichtung sind, dass die Mittel zur Ansteuerung des jeweiligen Schalters keine Mittel zur Synchronisation auf die mittelfrequenten Einspeisungen umfassen. Von Vorteil ist dabei, dass die Ansteuerung einfach, kostengünstig und insbesondere robust gegen Störeinflüsse bei asynchron arbeitenden Einspeisungen ist.

Bei einer vorteilhaften erfindungsgemäßen Ausführungsform entspricht die Anodenspannung des Thyristors (Thy, V4) dem Maximum aus Spannung am Zwischenkreiskondensator und Spannung am Schalter (S, V1). Von Vorteil ist dabei, dass keine gefährlich hohen Spannungsänderungen pro Zeit am Thyristor auftreten.

Bei einer vorteilhaften erfindungsgemäßen Ausführungsform ist die Anode des Thyristors über eine Diode mit mindestens einer Zwischenkreisdrossel verbunden und/oder ist die Anode des Thyristors über einen Widerstand R1 mit dem Zwischenkreiskondensator C6 verbunden. Von Vorteil ist dabei, dass die Diode den Bereich des von der Zwischenkreisdrossel gleichgerichteten Stromes und den Bereich der Verbraucherspannung entkoppelt. Somit ist vorteiligerweise der Thyristor im sperrenden Zustand mit einer Spannung ohne gefährlich hohe Spannungsänderungen pro Zeit versorgt und im leitenden Zustand ist der Zwischenkreisstrom mittels der genannten Diode über den Thyristor ableitbar.

Bei einer vorteilhaften erfindungsgemäßen Ausführungsform umfassen die Mittel zur Ansteuerung des jeweiligen Schalters einen Modulator mit zeitlich linear verlaufenden An- und Abstiegsflanken, wobei der Betrag der Steigung der An- und Abstiegsflanken unterschiedlich wählbar ist. Von Vorteil ist dabei, dass insbesondere ein einfach und kostengünstig zu generierendes sägezahnförmiges Modulatorsignal verwendbar ist.

Bei einer vorteilhaften erfindungsgemäßen Ausführungsform weist ein Anpasssteller mehrere Einspeisungen auf, die jeweils einen Gleichrichter speisen, deren Ausgangsströme jeweils über eine Zwischenkreisdrossel zusammengeführt werden und dass ein Schalter derart nachgeschaltet ist, dass der Zwischenkreisstrom je nach Leistungsbedarf des an dem Anpasssteller angeschlossenen Verbrauchers entweder einem die Ausgangsspannung U= des Anpassstellers puffernden Zwischenkreiskondensator zugeführt oder vor diesem Zwischenkreiskondensator abgeleitet wird. Von Vorteil ist dabei, dass nicht nur synchron, sondern auch asynchron arbeitenden Einspeisungen einsetzbar sind.

Bei einer vorteilhaften erfindungsgemäßen Ausführungsform werden die Ausgangsspannungen zweier oder mehrerer Ampasssteller über Dioden parallelgeschaltet zur Versorgung eines Verbrauchers. Von Vorteil ist dabei, dass die zur Verfügung stellbare Leistung beliebig erhöhbar ist.

Bei einer weiteren vorteilhaften erfindungsgemäßen Ausführungeform ist die Anode des Thyristors über eine Diode V3 mit mindestens einer Zwischenkreisdrossel verbunden. Von Vorteil ist dabei, dass somit eine Entkoppelung des Wechselanteils, insbesondere des hochfrequenten Spannungsanteils, erreichbar ist.

Bei einer weiteren vorteilhaften erfindungsgemäßen Ausführungsform ist die Anode des Thyristors über einen Widerstand R1 mit dem Zwischenkreiskondensator C6 verbunden. Von Vorteil ist dabei, dass die Spannungsänderung pro Zeit dU/dt unter einen derart kritischen Wert begrenzbar ist, dass kein Zünden des Thyristors infolge solch kritisch hoher Spannungsänderungen pro Zeit dU/dt ausgelöst wird.

### Bezugszelchenliste

- 1: Einspeisesteller (ESS)
- 2: Gyrator
- 3: Anpasstransformator
- 4: Übertragungsstrecke
- 5: Übertragerkopf mit Kompensationskondensator
- 6: Anpasssteller (APS)
- 7: Verbraucher
- 21: Einspeisung
- 22: Gleichrichter
- 23: Zwischenkreisdrossel
- 25: Schalter
- S, V1: Schalter
- 26: Diode
- C6, 27: Zwischenkreiskondensator
- I₌: Ausgangsstrom des Anpassstellers
- I_{Z}: Zwischenkreisstrom
- I_{ZV}: geglättetes Signal des Zwischenkreisstromes
- I_{SZ}: sägezahnförmiges Modulatorsignal
- I_{ST}: Steuersignal
- I_{A}: Stromquelle, Ausgangsstrom des Gyrators
- I_{O}: Strom in der Übertragungsstrecke
- Uₛₒᵢₗ: Sollspannung
- U₌: Ausgangsspannung des Anpassstellers
- U_{A}: Ausgangsspannung des Einspeisesteller
- C_{G}: Gyrator-Kapazität
- L_{G}: Gyrator-Induktivität
- Ü: Übersetzungsverhältnis des Anpasstransformators
- w_{Z}: Windungszahl des Übertragerkopfes
- f_{M}: Mittelfrequenz
- K_{D}: Verstärkung des Dämpfungsglieds
- K_{U}: Verstärkung des Spannungsreglers
- T₂: Zeitkonstante des Dämpfungeglieds
- T₃: Verzögerungszeitkonstante der Lastaufschaltung
- Sₑᵢₙ: Einschaltsignal für Schalter
- R1, R2, R3, R4, R5, R6, R7, R8, R9: Widerstand
- C1, C2, C3, C4, C5: Kondensator
- V2, V3, V7: Diode
- V4: Thyristor
- V5: Feldeffekttransistor
- V6: Transistor
- V8: Zenerdiode
- N1: Shuntregler

Die Erfindung wird nun anhand von Abbildungen näher erläutert,
Figur 1 zeigt ein beispielhaftes Prinzipschaltbild zur berührungslosen Energieübertragung mit einem Anpasssteller 6.
Figur 2 zeigt ein beispielhaftes Prinzipschaltbild des Anpassstellers mit Thyristor zum Schutz vor Überspannungen.
Figur 3 zeigt für ein Ausführungsbeispiel ein Prinzipschaltbild der Regelung und Ansteuerung des Anpassstellers.
Figur 4 zeigt die Generierung des zugehörigen Thyristor-Ansteuersignals.
Figur 5 zeigt einen erfindungsgemäßen beispielhaften Schaltplan des gesamten Überspannungsschutzes.

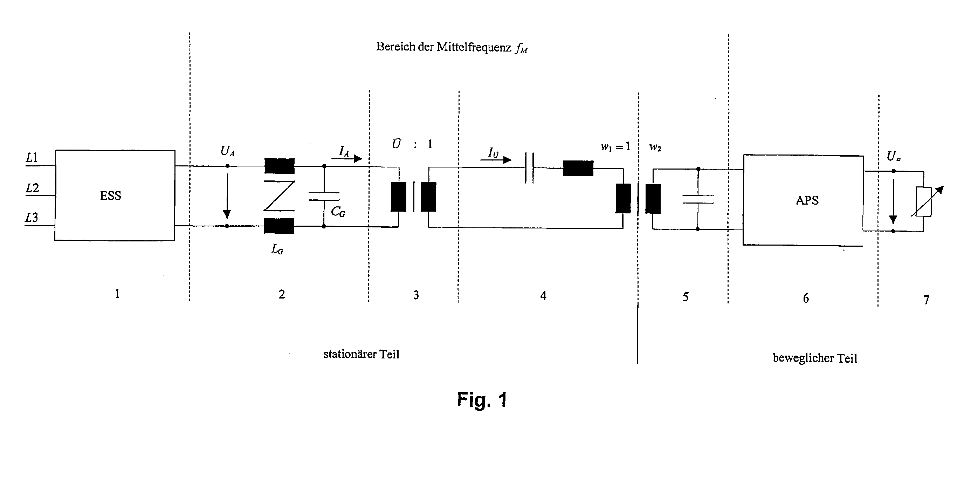

Figur 1 zeigt ein erstes beispielhaftes Prinzipschaltbild zur berührungslosen Energieübertragung mit einem Anpasssteller 6. Es umfasst einen stationären und einen beweglichen Teil.

Der stationäre Teil umfasst einen Einspeisesteller 1, einen Gyrator 2, einen Anpasstransformator 3 und eine Übertragungsstrecke 4.

Der Einspeisesteller 1 wandelt die aus dem Drehstromnetz (L1,L2,L3) aufgenommene niederfrequente Wechselspannung in eine mittelfrequente Spannung U_{A} mit konstanter Mittelfrequenz f_{M}, die beispielhaft 25kHz beträgt. Ein dem Einspeisesteller 1 nachgeschalteter, resonant betriebener Reihenschwingkreis, der sogenannte Gyrator 2, stellt eine spannungsgesteuerte Stromquelle I_{A} dar. Die Gyrator-Kapazität C_{G} und die Gyrator-Induktivität L_{G} werden entsprechend der Mittelfrequenz f_{M} und der Nennleistung des Einspeisestellers 1 ausgelegt.

Die Stromquelle I_{A} speist einen Anpasstransformator 3, dessen Übersetzungsverhältnis Ü derart ausgelegt ist, dass in der Übertragungsstrecke 4 ein in seinem Effektivwert konstanter Mittelfrequenzstrom I₀ fließt, unabhängig von der Nennleistung des Einspeisestellers 1.

Der bewegliche Teil umfasst einen Übertragerkopf 5 mit Kompensationskondensator, einen Anpasssteller 6 und einen Verbraucher 7. Die Übertragungsstrecke 4 weist einen langgestreckten Leiter auf, an den Spulenwicklungen des Übertragerkopfes 5 derart induktiv gekoppelt sind, dass eine Energieübertragung an das bewegliche Teil stattfindet. Dabei weist der Übertragerkopf 5 eine Windungszahl w₂ auf, wodurch die Stromstärke einer Einspeisung am Anpasssteller 6 bestimmt ist.

Der Anpasssteller 6 wandelt den aus dem Übertragerkopf 5 eingeprägten mittelfrequenten Strom in eine Gleichspannung U₌. Diese Spannung wird in einem Ausführungsbeispiel zur Speisung eines herkömmlichen Frequenzumrichters als Verbraucher 7 verwendet, um einen drehzahlverstellbaren Antrieb auf dem beweglichen Teil zu realisieren.

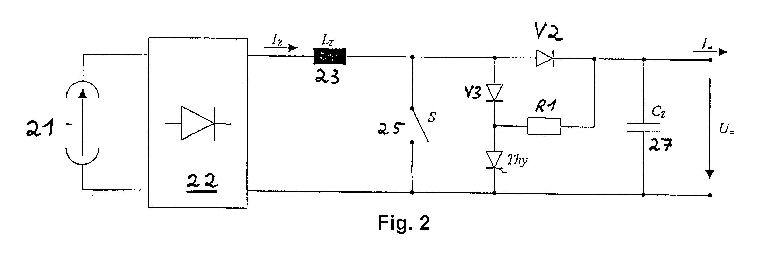

Der von der Übertragungsstrecke 4 auf den Übertragerkopf 5 übertragene Strom stellt eine Einspeisung 21 dar. Dieser Strom wird entsprechend der Figur 2 in einem Gleichrichter 22 des Anpassstellers 6 gleichgerichtet, mit einer Zwischenkreisdrossel 23 geglättet und je nach Leistungsbedarf des an dem Anpasssteller 6 angeschlossenen Verbrauchers 7 mittels eines Schalters 25 entweder dem die Ausgangsspannung U₌ des Anpassstellers 6 puffernden Zwischenkreiskondensator 27 zugeführt oder vor diesem Zwischenkreiskondensator 27 abgeleitet.

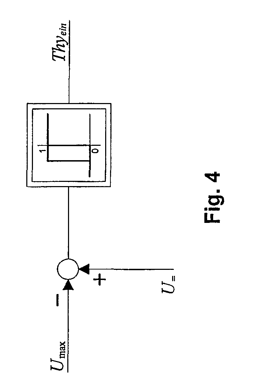

In der Figur 2 ist außerdem als elektronischer Leistungsschalter ein Thyristor Thy gezeigt, mit dem der über die Diode V3 den mit der Zwischenkreisdrossel 23 geglätteten Strom im Falle einer am Verbraucher 7 auftretenden, unerlaubt hohen Ausgangsspannung U₌, also einer Überspannung, durchleitbar ist. Die Generierung des zugehörigen Ansteuersignals Thy_{Ein} des Thyristors Thy ist in Figur 4 skizziert. Dabei wird die Ausgangsspannung U₌ mit einem maximal erlaubten Spannungswert U_{Max} verglichen. Bei Überschreiten dieses maximal erlaubten Spannungswerts U_{Max} wird dann der Thyristor Thy gezündet. Erst wenn der durch den Thyristor abgeleitete Strom verschwindet oder kleiner als der Haltestrom wird, sperrt der Thyristor Thy wieder. Dies ist beispielsweise dadurch bewirkbar, dass der Schalter (S, V1) geschlossen wird.

In der Figur 2 ist außerdem ein Widerstand R1 gezeigt, der die Schwankungen der am Thyristor Thy anliegenden Spannung beseitigt oder zumindest stark vermindert, insbesondere den Hochfrequenzanteil der am Thyristor Thy anliegenden Spannung stark bedämpft.

Bei Notfällen, wie beispielsweise einer Überlastung des Einspeisestellers, einer Unterversorgung des Anpassstellers, einem Kurzschluss in der Niederspannungsversorgung der Signalelektronik des Anpassstellers, die zum Erzeugen der Ansteuersignale für den Schalter (S, V1) dient, oder bei Ausfall eines wesentlichen Teiles in dieser signalelektronik, kann die Spannung am Zwischenkreiskondensator gefährlich hohe Werte erreichen und zu Zerstörungen führen. Der erfindungsgemäße Überspannungsschutz verhindert solche Zerstörungen.

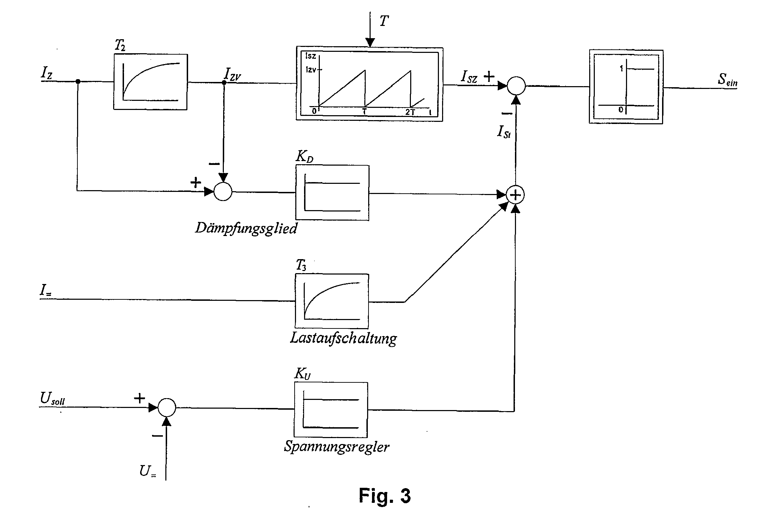

Figur 3 zeigt für ein Ausführungsbeispiel ein Prinzipschaltbild der Regelung und Ansteuerung des Schalters 25 des Anpassstellers, Dabei sind nichtlineare Glieder doppelt und lineare Glieder einfach umrahmt.

Der lineare Teil umfasst die Komponenten P-Spannungsregler der Verstärkung Kᵤ, Lastaufschaltung mit einer Verzögerungszeitkonstanten T₃ und Dämpfungsglied, umfassend Verzögerungsglied mit Zeitkonstante T₂ und Proportionalglied der Verstärkung K_{O}.

Der nichtlineare Teil umfasst einen Modulator und ein Zweipunktglied, das ein Einschaltsignal Sₑᵢₙ für den Schalter 25 generiert. Die Eingangsgröße des Zweipunktglieds wird aus der Differenz eines sägezahnförmigen Modulatorsignals I_{SZ} und einem Steuersignal Iₛₜ gebildet. Die Amplitude des sägezahnförmigen Modulatorsignals ist bestimmt durch das geglättete Signal I_{ZV} des Zwischenkreisstromes. Die Frequenz 1/T des Modulatorsignals wird asynchron zur Frequenz f_{M} der Einspeisung 21 vorgegeben.

Das Steuersignal I_{St} besteht aus der Summe der Ausgangssignale des P-Spannungsreglers, der Lastaufschaltung und des Dämpfungsglieds.

Das Ausgangssignal des P-Spannungsreglers ergibt sich durch die mittels eines Proportionalglieds gewichtete Differenz zwischen Sollspannung Uₛₒₗₗ und Ausgangsspannung U₌ des Anpassstellers.

Zur Bildung des Ausgangssignals der Lastaufschaltung wird der Ausgangsstrom I₌ des Anpassstellers einem Verzögerungsglied mit Verzögerungszeit T₃ zugeleitet.

Das Ausgangssignal des Dämpfungsglieds ergibt sich durch die mittels eines Proportionalglieds gewichtete Differenz von Zwischenkreisstrom I_{Z} und geglättetem Signal I_{ZV} des Zwischenkreisstromes. Die Verstärkung des Proportionalglieds beträgt K_{D}.

Dabei gewährleistet die Regelung und Ansteuerung folgende vorteilhafte Funktionen:

Der Spannungsregler ist als einfacher P-Regler ausgeführt, da die Lastaufschaltung vorsteuernd das Einschaltsignal Sₑᵢₙ des Schalters 25 vorgibt, wodurch der Spannungsregler weitgehend entlastet ist.

Das Dämpfungsglied bedämpft Eigenschwingungen des Zwischenkreisstromes I_{Z} in der aus induktivem Übertragerkopf 5 mit Kompensationskondensator, Gleichrichter 22 und Zwischenkreisdrossel 23 bestehenden schwingungsfähigen Anordnung.

In anderen erfindungsgemäßen Ausführungsbeispielen wird statt des sägezahnförmigen Modulatorsignals I_{SZ} ein periodisches Modulatorsignal mit zeitlich linear verlaufenden An- und Abstiegsflanken verwendet, wobei der Betrag der Steigung der An- und Abstiegsflanken unterschiedlich wählbar ist. Bei gleichem Betrag der Steigung der beiden Flanken ergibt sich ein dreieckförmiger Verlauf.

Im Gegensatz zur DE 197 35 624 C1 ist also nicht nur ein solches dreieckförmiges Modulatorsignal verwendbar, sondern insbesondere das in dem erfindungsgemäßen Ausführungsbeispiel eingesetzte, einfach zu generierende, sägezahnförmige Modulatorsignal.

Bei den erfindungsgemäßen Ausführungsbeispielen werden Amplitude und Periodendauer T jeweils wie beim beschriebenen sägezahnförmigen Modulatorsignal gewählt. Dabei wird die Periodendauer T als fester Wert aus einem 10%-breiten Toleranzband um 1/f_{M} herum gewählt.

Somit ist das Schalten des Schalters 25 asynchron zum Verlauf des Stromes der Einspeisung 21. Es liegt kein fester Phasenbezug vor.

Die Schaltverluste des elektronisch ausgeführten Schalters 25 sind im Wesentlichen umgekehrt proportional zur Schaltfrequenz 1/T. Aufgrund der großen verwendeten Periodendauer T ergeben sich also stark reduzierte Schaltverluste.

Die Dimensionierung der Zwischenkreisdrossel ist bestimmt durch die Verwendung der großen Periodendauer T, dem asynchronen Betrieb und der Forderung, dass der Zwischenkreisstrom im Betrieb nicht lückt, um einen kontinuierlichen Leistungsfluss zu gewährleisten. Von Vorteil ist bei diesem 10%-breiten Toleranzband, dass bei möglichst geringen Schaltverlusten die Zwischenkreisdrossel eine möglichst kleine Baugröße aufweist.

Bei anderen erfindungsgemäßen Ausführungsbeispielen ist als Periodendauer T auch ein Wert aus einem 50%-breiten Toleranzband um 1/f_{M} verwendbar.

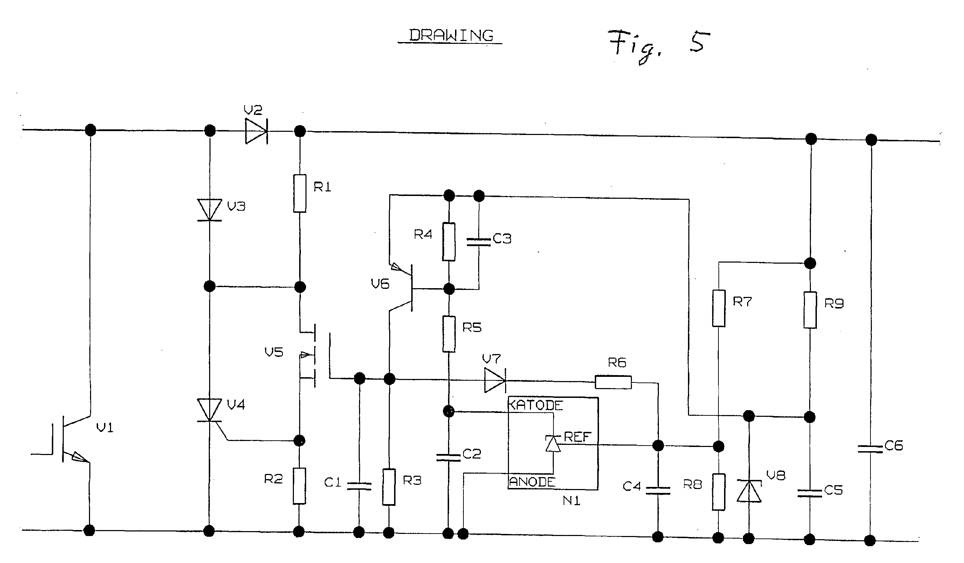

In der Figur 5 ist als erfindungsgemäßes Ausführungsbeispiel ein Schaltplan des gesamten Überspannungsschutzes mit Generierung des Ansteuersignals gezeigt.

Im Normalbetrieb ist der Überspannungsschutz nicht aktiv, da die Spannung am Zwischenkreiskondensator keinen kritischen Wert erreicht. Wenn jedoch im Notfall die Niederspannungsversorgung für die Ansteuerung des elektronischen Schalters V1 ausfällt oder fehlerhaft arbeitet, beispielsweise bei einem Reglerdefekt oder dergleichen, steigt die Spannung am Zwischenkreiskondensator und kann gefährliche Werte erreichen. Auch bei einer Überlastung der gesamten Anlage und/oder wenn der Anpasssteller unterversorgt ist, kann dies unter Umständen geschehen. In diesen Fällen wird der Überspannungsschutz aktiv.

Aus der durch den Zwischenkreiskondensator C6 geglälteten Spannung wird über den Vorwiderstand R9 und die Zenerdiode V8 eine Spannungsversorgung für die im Folgenden beschriebene Signalelektronik des Überspannungsschutzes gebildet. Dabei glättet der Kondensator C5 die an der Zenerdiode V8 anliegende Spannung.

Der aus den Widerständen R7 und R8 gebildete Spannungsteiler erzeugt aus der Zwischenkreisspannung eine Signalspannung, die einen von der Signalelektronik ausgewerteten Messwert für die Zwischenkreisspannung darstellt und durch den Kondensator C4 gefiltert und/oder geglättet wird.

Diese Signalspannung wird einerseits von der, aus der Diode V7 und dem Widerstand R6 gebildeten Mitkopplung beeinflusst und dient andererseits als Eingang für den Shuntregler N1.

Im Wesentlichen schaltet der Shuntregler N1 ab Erreichen eines kritischen Spannungswerts. Der Ausgang des Shuntreglers N1 wird von einem Spannungs-Pegelumsetzer, der aus dem Transistor V6 und den Widerständen R4 und R5 gebildet ist, invertiert, dient als Mitkopplung (V7, R6), die die Spannung am Kondensator C4, also am Eingang des Shuntraglers N1, erhöht und somit den aktivierten Zustand des Überspannungsschutzes stabilisiert, und wird dem Gate eines Feldeffekttransistors V5 zugeführt. Dieser Feldeffekttransistor V5 bildet eine Vorstufe zur Ansteuerung des Thyristors V4. Die Gleich- und Wechselspannungsanteile der Spannung am Gate des Feldeffekttransistors V5 werden vom Widerstand R3 und dem Kondensator C1 auf näherungsweise Null gebracht.

Der Widerstand R1 stabilisiert die an der Anode des Thyristors V4 anliegende Spannung auf das Niveau der am Zwischenkreiskondensator C6 anliegenden geglätteten Spannung. Somit werden keine unzulässig hohen Spannungsänderungen pro Zeit dU/dt erreicht, die den Thyristor V4 zünden oder beschädigen könnten.

Der Widerstand R2 senkt die Spannung am Gate derart ab, dass der Thyristor V4 gesperrt gehalten wird, solange der Feldeffekttransistor V5 gesperrt bleibt. Wird der Feldeffekttransistor V5 leitend, wird auch der Thyristor V4 gezündet und leitet dann den Zwischenkreisstrom über die Diode V3 ab. Der Thyristor V4 geht erst nach Unterschreiten des Haltestromes oder Verschwinden des durch ihn geleiteten Stromes wieder in den sperrenden Zustand.

Die Kondensatoren C2 und C3 dienen wiederum der Entstörung.

Zusammenfassend arbeitet der Überspannungsschutz also derart, dass nach Überschreiten einer kritischen Spannung am Zwischenkreiskondensator C6 der Thyristor V4 gezündet wird. Erst nach Absinken der Zwischenkreisspannung unter den maximal erlaubten Spannungswert U_{Max} und nach Unterschreiten des Haltestromes oder Verschwinden des durch den Thyristor V4 fließenden Stromes kann der Thyristor V4 wieder sperren.

Dieses Unterschreiten des Haltestromes oder Verschwinden des Stromes kann beispielsweise dadurch geschehen, dass der Schalter V1 durchgeschaltet wird oder dadurch, dass der Anpasssteller stromlos wird.

Bei anderen erfindungsgemäßen Ausführungsbeispielen ist statt des Feldeffekttransistors V5 ein IGBT, ein Bipolartransistor oder ein entsprechender elektronischer Schalter einsetzbar. Außerdem sind alle Teile und Komponenten durch andere Komponenten ersetzbar, die ein äquivalentes, entsprechendes Verhalten aufweisen. Insbesondere muss die Durchlassspannung am Schalter V1 bei Deaktivierung des Überspannungsschutzes kleiner sein als die Summe der durchlassspannungen von der Diode V3 und des Thyristors V4 bei Unterschreiten des Haltestromes des Thyristors V4.

Bei weiteren erfindungsgemäßen Ausführungsbeispielen sind auch zwei oder mehr Einspeisungen verwendbar. Dabei werden die eingespeisten Ströme jeweils in einem Gleichrichter gleichgerichtet, mit jeweils einer Zwischenkreisdrossel geglättet und zusammengeführt. Je nach Leistungsbedarf des an dem Anpasssteller angeschlossenen Verbrauchers wird der Zwischenkreisstrom I_{Z} mittels eines einzigen Schalters entweder dem die Ausgangsspannung U₌ des Anpassstellers puffernden Zwischenkreiskondensator zugeführt oder vor diesem Zwischenkreiskondensator abgeleitet.

Auf diese Weise sind nicht nur zwei synchron arbeitende, sondern auch zwei asynchron arbeitende Einspeisungen zur Versorgung des Anpassstellers einsetzbar.

Die Übertragerköpfe entnehmen also bei einem ersten erfindungsgemäßen Ausführungsbeispiel Energie aus derselben Strecke. In diesem Fall arbeiten die Einspeisungen synchron.

Die Übertragerköpfe entnehmen bei einem zweiten erfindungsgemäßen Ausführungsbeispiel Energie aus zwei verschiedenen Strecken. Dabei wird jede Strecke von einem Einspeisesteller versorgt, wobei die Frequenzen der Mittelfrequenzstromquelle der jeweiligen Einspeisesteller zumindest kleine Abweichungen aufweisen. Die Einspeisungen arbeiten asynchron. Dieser Betrieb wird durch die Glättung des jeweiligen gleichgerichteten Stromes der entsprechenden Einspeisung mittels jeweils einer Zwischenkreisdrossel vor der Zusammenführung der Ströme ermöglicht.

In anderen erfindungsgemäßen Ausführungsbeispielen entnehmen die Übertragerköpfe Energie aus mehreren verschiedenen Strecken. Dabei wird wiederum jede Strecke von einem Einspeisesteller versorgt, wobei die Frequenzen der Mittelfrequenzstromquelle der jeweiligen Einspeisesteller wieder kleine Abweichungen aufweisen. Die Einspeisungen arbeiten asynchron. Dieser Betrieb wird wiederum nur durch die Glättung des jeweiligen gleichgerichteten Stromes der entsprechenden Einspeisung mittels jeweils einer Zwischenkreisdrossel vor der Zusammenführung der Ströme ermöglicht.

Die gezeigten und beschriebenen Schaltbilder und Regelungen sind nur als Prinzipschaltbilder zu verstehen. Dem Fachmann ist die Auslegung und Abänderung zur praktischen Realisierung der Erfindung geläufig.

Bei anderen erfindungsgemäßen Ausführungsbeispielen weicht die Mittelfrequenz vom beispielhaft genannten Wert von 25 kHz ab. Auch Mittelfrequenzen im Bereich von 10 kHz bis 50 kHz sind technisch ausführbar.

## Patentansprüche

1. Verfahren zum Schutz mindestens eines Verbrauchers vor Überspannungen
bei einem Verfahren zur berührungslosen Energieübertragung elektrischer Leistung aus einer oder mehreren Mittelfrequenzstromquellen, deren Frequenzen Abweichungen um die Mittelfrequenz f_{M} aufweisen können, auf den mindestens einen bewegten Verbraucher über eine oder mehrere Übertragungsstrecken und den Verbrauchern zugeordneten Übertragerköpfen mit nachgeschaltetem Anpasssteller
zum Einstellen der von der Übertragungsstrecke aufgenommenen Leitung,
wobei eine Übertragungsstrecke von einer Mittelfrequenzstromquelle mit einem während der Leistungsübertragung in seinem Effektivwert konstanten Mittelfrequenzstrom gespeist wird,
wobei der jeweilige Verbraucher von mindestens einem Anpasssteller mit mindestens einer Einspeisung mit Energie versorgt wird, wobei ein oder mehrere eingespeiste Ströme in jeweils einem Gleichrichter gleichgerichtet, mit jeweils einer Zwischenkreisdrossel geglättet und zusammengeführt zur Bildung eines Zwischenkreisstromes werden,
wobei je nach Leistungsbedarf der Verbraucher der jeweils zusammengeführte Zwischenkreisstrom mittels eines Schalters (S, V1) entweder einem die Ausgangsspannung U₌ des Anpassstellers puffernden Zwischenkreiskondensator zugeführt oder vor diesem abgeleitet wird,
und wobei die Spannung U₌ an mindestens einem Zwischenkreiskondensator mit einem festen oder vorgebbaren Wert verglichen wird und bei Überschreiten dieses Wertes ein elektronischer Leistungsschalter (V4, Thy) zum Ableiten des Zwischenkreisstromes eingeschaltet wird,
wobei der Wechselanteil der am Schalter (S,V1) anliegenden Spannung derart entkoppelt wird, dass am Thyristor (V4, Thy) die Spannungsänderung pro Zelt dU/dt keine derartigen kritischen Werte erreicht, dass ein Zünden des Thyristors (V4, Thy) ausgelöst wird.

2. Verfahren nach Anspruch 1,
**dadurch gekennzeichnet, dass**
der Thyristor nach Zünden erst nach Unterschreiten seines Haltestromes oder bei Verschwinden des durch ihn abgeleiteten Stromes gesperrt wird.

3. Verfahren nach mindestens einem der vorangegangenen Ansprüche,
**dadurch gekennzeichnet, dass**
der Wechselanteil der am Thyristor anliegenden Spannung keine derart hohen kritischen Werte von Spannungsänderung pro Zeit dU/dt erreicht, dass infolge dieses Wechselanteils ein Zünden des Thyristors ausgelöst wird.

4. Verfahren nach mindestens einem der vorangegangenen Ansprüche,
**dadurch gekennzeichnet, dass**
der von der Zwischenkreisdrossel geglättete Strom keine derart hohen kritischen Werte von Stromänderung pro Zeit dl/dt aufweist, dass Infolge dieses Wechselanteils ein Zünden des Thyristors ausgelöst wird.

5. Verfahren nach mindestens einem der vorangegangenen Ansprüche,
**dadurch gekennzeichnet, dass**
die Spannung am Schalter (S,V1) einen Wechselanteil aufweist, der höher ist als der kritische Wert der Spannungsänderung pro Zeit dU/dt, die ein Zünden des Thyristors auslösen würde, wenn diese Spannung am Thyristor anliegen würde,

6. Verfahren nach mindestens einem der vorangegangenen Ansprüche,
**dadurch gekennzeichnet, dass**
die Signalelektronik zur Erzeugung des Ansteuersignals für den elektronischen Leistungsschalter aus der Spannung am Zwischenkreiskondensator versorgt wird.

7. Verfahren nach mindestens einem der vorangegangenen Ansprüche,
**dadurch gekennzeichnet, dass**
die Signalelektronik zur Erzeugung des Ansteuersignals für den elektronischen Leistungsschalter eine Mitkopplung umfasst.

8. Vorrichtung zur Durchführung des Verfahrens nach mindestens einem der vorangegangenen Ansprüche,
der Anpasssteller eine Schaltung zum Schutz vor Überspannungen am Zwischenkreiskondensator umfasst,
die mindestens einen elektronischen Thyristor (V4, Thy) umfasst, mit dem im leitenden Zustand Zwischenkreisstrom von der mindestens einen Zwischenkreisdrossel vor dem Zwischenkreiskondensator und/oder vor der Entkoppelungsdiode (V2) ableitbar ist,
wobei ein derartiges Entkopplungs-Mittel zur Entkopplung des Wechselanteils der am Schalter (S,V1) anliegenden Spannung vorgesehen ist, dass am Thyristor (V4, Thy) die Spannungsänderung pro Zeit dU/dt keine derartigen kritischen Werte erreicht, dass ein Zünden des Thyristors (V4, Thy) ausgelöst wird.

9. Vorrichtung nach mindestens einem der vorangegangenen Ansprüche,
**dadurch gekennzeichnet, dass**
die mindestens eine Zwischenkreisdrossel mit dem Zwischenkreiskondensator über eine Diode (V2) verbunden ist.

10. Vorrichtung nach mindestens einem der vorangegangenen Ansprüche,
**dadurch gekennzeichnet, dass**
der Thyristor nach Zünden erst bei Verschwinden des durch ihn abgeleiteten Stromes gesperrt wird.

11. Vorrichtung nach mindestens einem der vorangegangenen Ansprüche,
**dadurch gekennzeichnet, dass**
die Anodenspannung des Thyristors (Thy, V4) dem Maximum aus Spannung am Zwischenkreiskondensator und Spannung am Schalter (S, V1) entspricht.

12. Vorrichtung nach mindestens einem der vorangegangenen Ansprüche,
**dadurch gekennzeichnet, dass**
die Anode des Thyristors über eine Diode (V3) mit mindestens einer Zwischenkreisdrossel verbunden ist.

13. Vorrichtung nach mindestens einem der vorangegangenen Ansprüche,
**dadurch gekennzeichnet, dass**
die Anode des Thyristors über einen Widerstand (R1) mit dem Zwischenkreiskondensator C6 verbunden ist.

## Claims

1. Method for protecting at least one consumer against overvoltages
in a method for the non-contact energy transmission of electric power from one or more medium-frequency current sources, whose frequencies may have deviations around the medium frequency f_{M}, to the at least one moving consumer via one or more transmission lines and transformer heads, allocated to the consumers, having a downstream matching controller
for adjusting the power received from the transmission line,
a transmission line being supplied from a medium-frequency current source with a medium-frequency current that is constant in its effective value during the power transmission,
the respective consumer being supplied with energy by at least one matching controller having at least one feed-in, one or more fed currents being rectified in each instance in a rectifier, smoothed in each instance by a link-circuit reactor, and brought together to form a link-circuit current,
with the aid of a switch (S, V1), the link-circuit current, brought together in each instance, either being supplied to a link-circuit capacitor buffering the output voltage U₌ of the matching controller, or being shunted upstream of the link-circuit capacitor, depending upon the power demand of the consumers,
and the voltage U₌ at at least one link-circuit capacitor being compared with a fixed or predefinable value, and upon exceeding this value, an electronic power circuit-breaker (V4, Thy) being turned on for shunting the link-circuit current,
the alternating component of the voltage applied at the switch (S, V1) being decoupled in such a way that at the thyristor (V4, Thy) the voltage change per time dU/dt reaches no critical values such that an igniting of the thyristor (V4, Thy) is triggered.

2. Method according to Claim 1,
**characterised in that**
the thyristor, after igniting, is only blocked after there is a drop below its holding current or upon disappearance of the current shunted through it.

3. Method according to at least one of the preceding claims,
**characterised in that**
the alternating component of the voltage applied at the thyristor does not reach any high critical values of voltage change per time dU/dt such that an igniting of the thyristor is triggered because of this alternating component.

4. Method according to at least one of the preceding claims,
**characterised in that**
the current smoothed by the link-circuit reactor does not have any high critical values of current change per time dl/dt such that an igniting of the thyristor is triggered because of this alternating component.

5. Method according to at least one of the preceding claims,
**characterised in that**
the voltage at the switch (S, V1) has an alternating component which is higher than the critical value of the voltage change per time dU/dt that would trigger an igniting of the thyristor if this voltage were applied to the thyristor.

6. Method according to at least one of the preceding claims,
**characterised in that**
the signal electronics for generating the driving signal for the electronic power circuit-breaker are supplied from the voltage at the link-circuit capacitor.

7. Method according to at least one of the preceding claims,
**characterised in that**
the signal electronics for generating the driving signal for the electronic power circuit-breaker include a positive feedback.

8. Device for carrying out the method according to at least one of the preceding claims,
the matching controller includes a circuit for protection against overvoltages at the link-circuit capacitor,
the circuit including at least one electronic thyristor (V4, Thy), by which, in the conductive state, link-circuit current from the at least one link-circuit reactor is able to be shunted upstream of the link-circuit capacitor and/or upstream of the decoupling diode (V2),
a decoupling means for decoupling the alternating component of the voltage applied at the switch (S, V1) being provided in such a way that at the thyristor (V4, Thy) the voltage change per time dU/dt reaches no critical values such that an igniting of the thyristor (V4, Thy) is triggered.

9. Device according to at least one of the preceding claims,
**characterised in that**
the at least one link-circuit reactor is connected to the link-circuit capacitor via a diode (V2).

10. Device according to at least one of the preceding claims,
**characterised in that**
the thyristor, after igniting, is only blocked upon disappearance of the current shunted through it.

11. Device according to at least one of the preceding claims,
**characterised in that**
the anode voltage of the thyristor (Thy, V4) corresponds to the maximum from voltage at the link-circuit capacitor and voltage at the switch (S, V1).

12. Device according to at least one of the preceding claims,
**characterised in that**
the anode of the thyristor is connected via a diode (V3) to at least one link-circuit reactor.

13. Device according to at least one of the preceding claims,
**characterised in that**
the anode of the thyristor is connected via a resistor (R1) to the link-circuit capacitor C6.

## Revendications

1. Procédé pour protéger au moins un consommateur contre les surtensions
dans un procédé de transmission d'énergie sans contact de puissance électrique depuis une ou plusieurs sources de courant à moyenne fréquence, dont les fréquences peuvent présenter des déviations autour de la moyenne fréquence f_{M}, audit au moins un consommateur mobile via un ou plusieurs chemins de transmission et des têtes de transmission associées aux consommateurs avec adaptateur branché en aval
pour régler la puissance absorbée par le chemin de transmission,
un chemin de transmission étant alimenté par une source de courant à moyenne fréquence dont la valeur efficace du courant à moyenne fréquence est constante pendant la transmission de puissance,
le consommateur respectif étant alimenté en énergie par au moins un adaptateur avec au moins une alimentation, un ou plusieurs courants alimentés étant redressés dans un redresseur respectif, lissés par au moins une inductance de circuit intermédiaire respective et réunis pour former un courant de circuit intermédiaire,
le courant de circuit intermédiaire réuni étant, selon le besoin de puissance des consommateurs, soit amené à un condensateur de circuit intermédiaire servant de tampon pour la tension de sortie U= de l'adaptateur, soit détourné de celui-ci au moyen d'un commutateur (S, V1),
et la tension U= à au moins un condensateur de circuit intermédiaire étant comparée avec une valeur fixe ou prescriptible et, en cas de dépassement de cette valeur, un commutateur de puissance électronique (V4, Thy) servant à détourner le courant de circuit intermédiaire étant activé,
la composante alternative de la tension appliquée au commutateur (S, V1) étant découplée de telle manière que la variation de tension par rapport au temps dU/dt au thyristor (V4, Thy) n'atteigne pas des valeurs critiques suffisamment élevées pour qu'un allumage du thyristor (V4, Thy) soit déclenché.

2. Procédé selon la revendication 1,
**caractérisé en ce que**
après son allumage, le thyristor est bloqué seulement après dépassement vers le bas de son courant de maintien ou en cas de disparition du courant détourné par lui.

3. Procédé selon au moins une des revendications précédentes,
**caractérisé en ce que**
la composante alternative de la tension appliquée au thyristor n'atteint pas des valeurs critiques de variation de tension par rapport au temps dU/dt suffisamment élevées pour qu'un allumage du thyristor soit déclenché du fait de cette composante alternative.

4. Procédé selon au moins une des revendications précédentes,
**caractérisé en ce que**
le courant lissé par l'inductance de circuit intermédiaire ne présente par des valeurs critiques de variation de courant par rapport au temps dI/dt suffisamment élevées pour qu'un allumage du thyristor soit déclenché du fait de cette composante alternative.

5. Procédé selon au moins une des revendications précédentes,
**caractérisé en ce que**
la tension au commutateur (S, VI) présente une composante alternative qui est plus élevée que la valeur critique de la variation de tension par rapport au temps dU/dt qui provoquerait un allumage du thyristor si cette tension était appliquée au thyristor.

6. Procédé selon au moins une des revendications précédentes,
**caractérisé en ce que**
l'électronique de signal servant à générer le signal de commande pour le commutateur de puissance électronique est alimentée à partir de la tension au condensateur de circuit intermédiaire.

7. Procédé selon au moins une des revendications précédentes,
**caractérisé en ce que**
l'électronique de signal servant à générer le signal de commande pour le commutateur de puissance électronique comprend une rétroaction positive.

8. Dispositif pour réaliser le procédé selon au moins une des revendications précédentes, dans lequel l'adaptateur comprend un circuit de protection contre les surtensions au condensateur de circuit intermédiaire,
qui comprend au moins un thyristor électronique (V4, Thy) avec lequel, dans l'état conducteur, du courant de circuit intermédiaire peut être détourné du condensateur de circuit intermédiaire et/ou de la diode de découplage (V2) par ladite au moins une inductance de circuit intermédiaire,
un moyen de découplage pour découpler la composante alternative de la tension appliquée au commutateur (S, V1) étant prévu de telle manière que la variation de tension par rapport au temps dU/dt au thyristor (V4, Thy) n'atteigne pas des valeurs critiques suffisamment élevées pour qu'un allumage du thyristor (V4, Thy) soit déclenché.

9. Dispositif selon au moins une des revendications précédentes,
**caractérisé en ce que**
ladite au moins une inductance de circuit intermédiaire est reliée au condensateur de circuit intermédiaire par une diode (V2).

10. Dispositif selon au moins une des revendications précédentes,
**caractérisé en ce que**
après son allumage, le thyristor est bloqué seulement en cas de disparition du courant détourné par lui.

11. Dispositif selon au moins une des revendications précédentes,
**caractérisé en ce que**
la tension d'anode du thyristor (Thy, V4) correspond au maximum de la tension au condensateur de circuit intermédiaire et de la tension au commutateur (S, V1).

12. Dispositif selon au moins une des revendications précédentes,
**caractérisé en ce que**
l'anode du thyristor est reliée à au moins une inductance de circuit intermédiaire par une diode (V3).

13. Dispositif selon au moins une des revendications précédentes,
**caractérisé en ce que**
l'anode du thyristor est reliée au condensateur de circuit intermédiaire C6 par une résistance (R1).
